# EUROPEAN PATENT APPLICATION

(11) **EP 4 502 880 A1**
(43) Date of publication of application: **05.02.2025**
(21) Application number: 23799232.6
(22) Date of filing: 28.04.2023
(51) Int. Cl.: G06N 20/00

(54) **MODEL SELECTION METHOD AND APPARATUS, AND NETWORK-SIDE DEVICE**

(30) Priority: 05.05.2022 CN 202210483837
(71) Applicant: Vivo Mobile Communication Co., Ltd., Dongguan, Guangdong 523863 (CN)
(72) Inventor: CHONG, Weiwei, Dongguan, Guangdong 523863 (CN)
(74) Representative: Murgitroyd & Company
(86) International application number: PCT/CN2023/091723
(87) International publication number: WO 2023/213246

(57) **Abstract**

This application discloses a model selection method and apparatus, and a network-side device, and belongs to the technical field of communications. The model selection method according to embodiments of this application includes: recording, by a first network element, model information of N candidate models, where the N candidate models are applicable to a data analysis task corresponding to a first analytic identifier (ID); receiving, by the first network element, a first model request message from a second network element; and sending, by the first network element in a case that model information of M candidate models of the N candidate models matches model information corresponding to the first model request message, model information of P candidate models of the M candidate models to the second network element; where N, M, and P are all positive integers, N is greater than or equal to M, and M is greater than or equal to P.

## Description

### CROSS-REFERENCE TO RELATED APPLICATION

This application claims the priority of Chinese Patent Application No. 202210483837.0 filed in China on May 5, 2022, the entire content of which is hereby incorporated by reference.

### TECHNICAL FIELD

This application belongs to the technical field of communications, and in particular, relates to a model selection method and apparatus, and a network-side device.

### BACKGROUND

In a communication network, some network elements (e.g., a network data analytics function (NWDAF) and the like) may perform intelligent data analysis and generate data analysis results for some tasks. The data analysis results may assist devices inside and outside the network to make policy decisions, which can improve intelligence of the policy decisions of the devices.

A model training logical function (MTLF) in the NWDAF may train an artificial intelligence (artificial intelligence, AI)/machine language (machine language, ML) model based on training data, so as to obtain a model applicable to a certain AI data analysis task. An analytics logical function (Analytics Logical Function, AnLF) in the NWDAF may perform model inference based on the AI/ML model and inference input data, and obtain a data analysis result (also referred to as an inference result (analytics)) for a specific AI data analysis task. Therefore, a policy control function (Policy Control Function, PCF) in the network may intelligently execute a corresponding policy based on the data analysis result. For example, an intelligent user residence strategy is developed based on analysis results for service behaviors of a user, to improve service experience of the user. Alternatively, an access and mobility management function (Access and Mobility Management Function, AMF) intelligently performs a mobility management operation based on the data analysis result, which, for example, intelligently pages the user according to an analysis result for a movement trajectory of the user, to improve paging reachability.

However, in the above process, whether the devices inside and outside the network can make correct policy decisions according to the data analysis results is based on correct data analysis results. If the data analysis results have low accuracy, erroneous information may be provided for the devices inside and outside the network for reference. As a result, the devices inside and outside the network make wrong policy decisions or perform inappropriate operations. Therefore, how to ensure data analysis performance (e.g., accuracy) of the AI/ML model is an urgent problem.

### SUMMARY

Embodiments of this application provide a model selection method and apparatus, and a network-side device, which can solve the problem of poor data analysis performance of existing AI/ML models.

In a first aspect, a model selection method is provided, including: recording, by a first network element, model information of N candidate models, where the N candidate models are applicable to a data analysis task corresponding to a first analytic identifier (ID); receiving, by the first network element, a first model request message from a second network element; and sending, by the first network element in a case that model information of M candidate models of the N candidate models matches model information corresponding to the first model request message, model information of P candidate models of the M candidate models to the second network element; where N, M, and P are all positive integers, and N≥M≥P.

In a second aspect, a model selection apparatus is provided, including: a recording module configured to record model information of N candidate models, where the N candidate models are applicable to a data analysis task corresponding to a first analytic ID; a first receiving module configured to receive a first model request message from a second network element; and a first sending module configured to send, in a case that model information of M candidate models of the N candidate models matches model information corresponding to the first model request message, model information of P candidate models of the M candidate models to the second network element; where N, M, and P are all positive integers, and N≥M≥P.

In a third aspect, a network-side device is provided, including a processor and a memory, where the memory stores a program or an instruction executable on the processor, and when the program or the instruction is executed by the processor, steps of the method as described in the first aspect are implemented.

In a fourth aspect, a network-side device is provided. The network-side device includes a processor and a communication interface, where the processor is configured to record model information of N candidate models, the N candidate models are applicable to a data analysis task corresponding to a first analytic ID, and the communication interface is configured to receive a first model request message from a second network element, and send, in a case that model information of M candidate models of the N candidate models matches model information corresponding to the first model request message, model information of P candidate models of the M candidate models to the second network element; where N, M, and P are all positive integers, and N≥M≥P.

In a fifth aspect, a readable storage medium is provided, where the readable storage medium stores a program or an instruction, and when the program or the instruction is executed by a processor, steps of the model selection method as described in the first aspect are implemented.

In a sixth aspect, a chip is provided, where the chip includes a processor and a communication interface, the communication interface is coupled to the processor, and the processor is configured to run a program or an instruction to implement the model selection method as described in the first aspect.

In a seventh aspect, a computer program/program product is provided, where the computer program/program product is stored in a storage medium, and the computer program/program product is executed by at least one processor to implement steps of the model selection method as described in the first aspect.

In the embodiments of this application, the first network element may record model information of N candidate models, where the N candidate models are applicable to a data analysis task corresponding to a first analytic ID; and receive a first model request message from a second network element; and the first network element sends, in a case that model information of M candidate models of the N candidate models matches model information corresponding to the first model request message, model information of P candidate models of the M candidate models to the second network element; where N, M, and P are all positive integers, and N≥M≥P. Through the solution, since the first network element may record model information of candidate models applicable to a data analysis task, the first network element, after receiving a first model request message, may determine whether the recorded model information of the candidate models matches model information corresponding to the first model request message, thereby determining an optimal model that meets the first model request message or a model that meets a performance requirement. In this way, performance of the model in data analysis can be ensured.

### BRIEF DESCRIPTION OF THE DRAWINGS

FIG. 1 is a block diagram of a wireless communication system according to an embodiment of this application;
FIG. 2 is a schematic flowchart of a model selection method according to an embodiment of this application;
FIG. 3 is a schematic flowchart I of an application of a model selection method according to an embodiment of this application;
FIG. 4 is a schematic flowchart II of an application of a model selection method according to an embodiment of this application;
FIG. 5 is a schematic structural diagram of a model selection apparatus according to an embodiment of this application;
FIG. 6 is a schematic structural diagram of a network-side device according to an embodiment of this application; and
FIG. 7 is a schematic diagram of hardware of a network-side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill based on the embodiments of this application fall within the protection scope of this application.

The terms "first" and "second" in the specification and claims of this application are used to distinguish similar objects, but are not used to describe a specific order or sequence. It is to be understood that the terms used in this way are interchangeable under appropriate circumstances, so that the embodiments of this application can be implemented in an order different from the order shown or described herein. In addition, the objects distinguished by "first" and "second" are generally of a same type, without limiting a quantity of objects. For example, there may be one or more first models. In addition, "and/or" in the specification and the claims represents at least one of the connected objects, and the character "/" generally indicates an "or" relationship between associated objects.

It is to be noted that the technology described in the embodiments of this application is not limited to a long term evolution (Long Term Evolution, LTE)/LTE-advanced (LTE-Advanced, LTE-A) system, and may further be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the described technologies may be applied to the systems and radio technologies mentioned above and may also be applied to other systems and radio technologies. A 5G system is described below for a purpose of example, and 5G terms are used in most of the descriptions below. However, these technologies may also be applied to applications other than 5G system applications, such as a 6^{th} generation (6^{th} Generation, 6G) communication system.

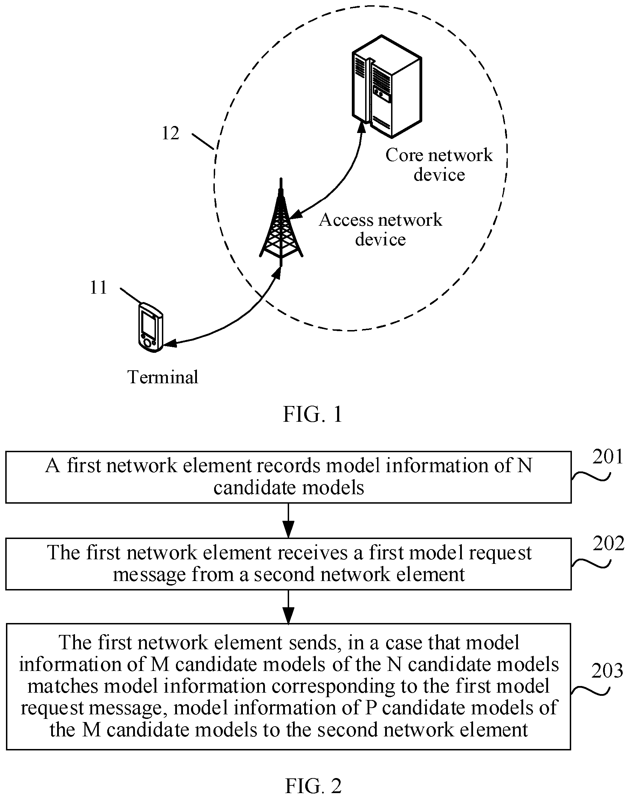

FIG. 1 is a block diagram of a wireless communication system to which an embodiment of this application are applicable. The wireless communication system includes a terminal 11 and a network-side device 12. The terminal may also be referred to as a user equipment (User Equipment, UE). The terminal 11 may be a terminal-side device such as a mobile phone, a tablet personal computer (Tablet Personal Computer, TPC), a laptop computer (Laptop Computer, LP) or notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television set, a washing machine, or a furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It is to be noted that a specific type of the terminal 11 is not limited in this embodiment of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (WLAN) access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), and another appropriate term in the art. Provided that a same technical effect is achieved, the base station is not limited to a specific technical term. It is to be noted that in this embodiment of this application, the base station in the NR system is merely used as an example, and a specific type of the base station is not limited. The core network device may include, but is not limited to, at least one of the following: a core network node, a core network function, a network data analytics function (Network Data Analytics Function, NWDAF), an analytics data storage function (analytics data storage function, ADRF), a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It is to be noted that in this embodiment of this application, the core network device in the 5G system is merely used as an example, and a specific type of the core network device is not limited.

In this embodiment of this application, the MTLF and the AnLF may be used as separate network elements or as logical function modules inside the NWDAF. The MTLF and the AnLF may be deployed in a same NWDAF, or separately deployed in different NWDAFs, or deployed outside the NWDAF.

A model selection method according to an embodiment of this application is described in detail below through some embodiments and application scenarios thereof with reference to the accompanying drawings.

As shown in FIG. 2, an embodiment of this application provides a model selection method. The method may include step 201 to step 203 below.

Step 201: A first network element records model information of N candidate models.

The N candidate models are applicable to a data analysis task corresponding to a first analytic ID (analytic ID). The data analysis task may also be referred to as an inference task.

It is to be noted that an analytic ID (analytic ID) may be used for identifying a data analysis task, which is a type. That is, the analytic ID may be used for indicating a data analysis task type. It may be understood that the data analysis task corresponding to the above first analytic ID may be a data analysis task identified by the first analytic ID.

For example, if an analytic ID is mobility (mobility) of a UE, a data analysis task identified by the analytic ID is to predict a movement trajectory of the UE. If the analytic ID is communication (communication) of the UE, the data analysis task identified by the analytic ID is to predict communication performance and behaviors of the UE.

Optionally, in this embodiment of this application, the above first network element may include an MTLF or an analytics data storage function (analytics data storage function, ADRF).

In some embodiments, model information of N candidate models recorded by the MTLF may be model information determined by the MTLF, and model information of N candidate models recorded by the ADRF may be model information obtained from the MTLF.

Optionally, in this embodiment of this application, the above N candidate models may be a plurality of different model or different models obtained after a model has been trained or retrained multiple times, which may specifically be determined according to an actual usage requirement and is not limited in this embodiment of this application.

Optionally, in this embodiment of this application, the model information of each of the candidate models may include at least one of the following.
a. A model identifier (model identifier, model ID) of the candidate model. An ID of a candidate model is used for uniquely identify the candidate model.
b. Model file information of the candidate model. Any information related to the candidate model such as a network structure, weight parameters, and input and output data of the candidate model may be saved in the model file information of the candidate model.
c. Download address information of the candidate model. The download address information of the candidate model is used for indicating a storage address of a model file of the candidate model. That is, the download address information is used for indicating a download address of the model file of the candidate model. For example, when the candidate model is stored in the ADRF, the download address information may be address information of the ADRF.
d. An analytic ID of the candidate model. The analytic ID of the candidate model is used for identifying a data analysis task to which the candidate model is applicable, for example, a first analytic ID.
e. Usage scope (usage scope) information of the candidate model. The usage scope information may indicate at least one of the following: a usage area scope, a usage time scope, and a usage object scope.
   A usage object may include one UE, a plurality of UEs, or any UE, which may specifically be determined according to an actual usage requirement and is not limited in this embodiment of this application. The UE may be identified by an UE ID, UE address information, a UE group ID, or the like.
f. Model performance information of the candidate model.

In this embodiment of this application, the model performance information may be used for representing a degree of consistency or matching between an output result (i.e., a predicted value or statistical value) of the model and a true value. Matching means that a deviation between the predicted value (or statistical value) and the true value is within a preset range.

In a manner, the degree of matching may be obtained through one or more comparison results. For example, the degree of matching may be obtained by comparing the predicted value and the true value multiple times. In another manner, the degree of matching may be a ratio of a number of times of consistency or matching between the predicted value and the true value to a total number of times of prediction.

Optionally, in this embodiment of this application, performance indicated by the model performance information includes at least one of model accuracy (accuracy) and a model mean absolute error (mean absolute error, MAE). Certainly, in actual implementation, the model performance information may alternatively include other information that can reflect the performance of the model, which is specifically determined according to an actual usage requirement.

It is to be noted that the performance indicated by the model performance information may be expressed in any possible form such as a numerical value, a level, or a percentage. For example, when performance indicated by model performance indication information includes model accuracy, the model accuracy may be expressed by an accurate numerical value.

In this embodiment of this application, since the model information of the candidate model may reflect performance of the candidate model in actual use and a corresponding usage scope thereof, when another network element (e.g., a second network element in this embodiment of this application) requests a model, the first network element may determine, according to the information, an optimal model that matches a model request message sent by the second network element (e.g., the first model request message in this embodiment of this application). For example, in a case that the model information includes usage scope information, the first network element may provide different models for different usage scopes, thereby improving performance of the model for data analysis in the network. In a case that the model information includes model performance information, the first network element may select an eligible model according to a requirement for performance of a requested model, thereby improving the performance of the model for data analysis in the network.

It is to be noted that the above actual usage process may include processes of actual use and data reasoning (or data analysis) in the network.

Step 202: The first network element receives a first model request message from a second network element.

Optionally, in this embodiment of this application, the second network element may include an AnLF or MTLF.

In this embodiment of this application, the first network element is an MTLF, and the second network element is an AnLF. Alternatively, the first network element is an AnLF, and the second network element is an MTLF. Alternatively, the first network element is an MTLF1, and the second network element is an MTLF2. The MTLF 1 and the MTLF 2 may be different MTLFs.

It is to be noted that in this embodiment of this application, description is based on an example in which the first network element is an MTLF and the second network element is an AnLF.

Optionally, in this embodiment of this application, the above first model request message may include at least one of the following.
A. A second analytic ID. The second analytic ID may be used for identifying a data analysis task to which the requested model is applicable. For example, the second analytic ID is mobility (mobility) of a UE. Then, the data analysis task used by the requested model is: to predict a movement trajectory of a user.
B. Model filter information. The model filter information may be used for indicating a condition that the requested model needs to meet, such as an area of interest (area of interest, AOI), single network slice selection assistance information (single network slice selection assistance information, S-NSSAI), and a data network name (DNN).
C. Model object information. The model object information may be used for indicating a training object for which the model is requested. The training object may be one UE, a plurality of UEs, or any UE.
D. Model reporting information. The model reporting information may include at least one of a reporting manner, application time, and reporting time of the requested model. The reporting manner may include periodic reporting or conditional reporting. Certainly, during actual implementation, the model reporting information may further include any other possible information, which is not specifically limited in this embodiment of this application.
E. Model performance requirement information. The model performance requirement information may be used for indicating performance that the requested model needs to meet, such as minimum accuracy or an maximum MAE that the model needs to achieve.

Step 203: The first network element sends, in a case that model information of M candidate models of the N candidate models matches model information corresponding to the first model request message, model information of P candidate models of the M candidate models to the second network element.

N, M, and P are all positive integers, and N≥M≥P.

It may be understood that the above P candidate models may be the M candidate models or part of the M candidate models.

In this embodiment of this application, after the first network element receives the above first model request message, the first network element may determine, from the above N candidate models, candidate models whose model information matches the model information corresponding to the first model request message, for example, the above M candidate models. After determining the M candidate models, the first network element may send model information of part or all of the M candidate models (i.e., the above P candidate models) to the second network element. Therefore, the second network element can perform a data analysis task corresponding to the first analytic ID based on the P candidate models, and obtain a corresponding data analysis result.

Optionally, in this embodiment of this application, the matching between the model information of the M candidate models and the model information corresponding to the first model request message may include at least one of the following.
(1) The first analytic ID is the same as the second analytic ID. It may be understood that, in a case that the first analytic ID is the same as the second analytic ID, the data analysis task corresponding to the first analytic ID is the same as a data analysis task corresponding to the second analytic ID.
(2) A usage area scope included in model usage scope information of the M candidate models matches the model filter information included in the above first model request message. For example, S-NSSAI, an AOI, or a DNN included in the model usage scope information of the M candidate models is the same as the S-NSSAI, the AOI, or the DNN included in the above model filter information, or the S-NSSAI, the AOI, or the DNN included in the model usage scope information of the M candidate models includes the S-NSSAI, the AOI, or the DNN included in the above model filter information. The model usage scope information of the M candidate models may include a plurality of DNNs. That is, the model usage scope information may correspond to a DNN list (list). Then, the DNN in the model filter information may be DNNs in the DNN list.
(3) A usage object scope included in the model usage scope information of the M candidate models matches the model object information included in the above first model request message. For example, the usage object scope included in the model usage scope information of the M candidate models may include a plurality of objects (e.g., a plurality of UEs). That is, the usage object scope may correspond to an object list. Then, an object indicated by the model object information may be objects in the object list.
(4) A usage time scope included in the model usage scope information of the M candidate models matches the model reporting information included in the above first model request message. For example, the usage time scope included in the model usage scope information of the M candidate models is the same as application time of a model corresponding to the above model reporting information, or the application time of the model corresponding to the above model reporting information is included in the usage time scope, or the like.
(5) Model performance information of the M candidate models meets performance indicated by the model performance requirement information included in the above first model request message. For example, performance of a model corresponding to the model performance information of the M candidate models is higher than the performance indicated by the above model performance requirement information.

Optionally, in this embodiment of this application, in a case that the first network element is an MTLF and the second network element is an AnLF, the AnLF and the MTLF request and obtain the model information through Nnwdaf MLModelProvision_Subscribe and Nnwdaf MLModelProvision _Notify; or the AnLF and the MTLF request and obtain the model information through an Nnwdaf_MLModelInfo_Request message and an Nnwdaf_MLModelInfo_Response message.

Optionally, in a case that the first network element is an ADRF and the second network element is an AnLF, the AnLF and the ADRF request and obtain the model information through an Nadrf_DataManagement_RetrievalRequest and an Nadrf_DataManagement_RetrievalResponse message; or the AnLF and the ADRF request and obtain the model information through Nadrf_DataManagement_RetrievalSubscribe and Nadrf_DataManagement_RetrievalNotify.

In this embodiment of this application, since the first network element may record model information of candidate models applicable to a data analysis task, the first network element, after receiving a first model request message, may determine whether the recorded model information of the candidate models matches model information corresponding to the first model request message sent by the second network element, thereby determining an optimal model that meets the first model request message or a model that meets a performance requirement. In this way, performance of the model in data analysis can be ensured.

Optionally, before step 201, the model selection method according to this embodiment of this application may further include step 204 below.

Step 204: The first network element determines, according to model performance information of K models, the N candidate models that meet a preset condition from the K models.

The above K models may be applied to the data analysis tasks corresponding to the above first analytic ID, and K is a positive integer. The preset condition may include either of the following:
performance indicated by the model performance information being the highest among the K models; and
the performance indicated by the model performance information being higher than first preset performance.

It is to be noted that the performance indicated by the model performance information may be expressed in any possible form such as a numerical value, a level, or a percentage. For example, when performance indicated by model performance indication information includes model accuracy, the model accuracy may be expressed by an accurate numerical value. It may be understood that the above first preset performance may alternatively be a numerical value, a level, or a percentage.

Optionally, in this embodiment of this application, the above K models may include a plurality of candidate models applicable to the data analysis task corresponding to the first analytic ID, or the K models may include a plurality of models obtained after multiple times of training according to the data analysis task corresponding to the first analytic ID.

Optionally, in this embodiment of this application, in a case that the above K models include a plurality of models obtained after multiple times of training according to the data analysis task corresponding to the first analytic ID, the model selection method provided in this embodiment of this application may further include step 205 and step 206 below.

Step 205: In a case that performance of a first model sent by the first network element to a fourth network element is lower than second preset performance, the first network element retrains the first model or performs model reselection according to usage scope information of the first model to obtain a second model.

The above second model is one of the K models. The above fourth network element may be an AnLF. For example, the fourth network element may be an AnLF 1.

Optionally, in this embodiment of this application, the above fourth network element may be the same as the second network element. In other words, a model request message for obtaining the first model and the above first model request message are sent by a same network element, for example, both are sent by the ANLF1. For example, after the ANLF1 loses the optimal model due to failure, a model request message may be sent to the MTLF or the ADRF to reobtain an optimal model.

Optionally, in this embodiment of this application, the usage scope information of the above first model may be obtained from the fourth network element.

In this embodiment of this application, "the first network element retrains the first model according to usage scope information of the first model" means that model training is performed again on the first model for a usage scope of the first model. Specifically, in an example in which the first network element is an MTLF and the fourth network element is an AnLF 1, the MTLF collects label data corresponding to the usage scope of the first model as a training data set, and retrains the model based on the training data set. Training data in the training data set may include label data obtained from a data provider (data provider), e.g., label data obtained by the MTLF from the AnLF 1. It may be understood that the training data used by the MTLF includes the label data.

Based on the above retraining on the first model, the first network element may update and iterate the first model according to performance of the first model in an existing network, record performance of each model, and find and record an optimal model or the most appropriate model corresponding to the usage scope information of the first model. Subsequently, when another network element (e.g., the fourth network element or the fifth network element above) requests obtaining a model, the first network element may provide an optimal model or the most appropriate model according to a usage scope of the requested model.

The above model reselection means that after the first network element sends model information of the first model to the fourth network element, in a case that there are a plurality of candidate models (including the first model that has been sent) to choose from for a model request message of the fourth network element (e.g., a second model request message in this embodiment of this application), if the performance of the first model is lower than the second preset performance, the first network element may reselect another candidate model (e.g., the second model) from the plurality of candidate models and send the candidate model to the fourth network element.

Based on the above model reselection, the first network element may obtain and record performance of the above plurality of models in actual use and corresponding usage scopes thereof. Subsequently, when another network element (e.g., the fourth network element or the fifth network element) requests obtaining a model, the first network element may provide an optimal model or the most appropriate model according to a usage scope of the requested model.

Step 206: The first network element sends model information of the second model to the fourth network element or a fifth network element.

Optionally, in this embodiment of this application, the above fifth network element may be an AnLF. It may be understood that the fifth network element and the above fourth network element are different AnLFs. For example, the fourth network element is an AnLF 1, and the fifth network element is an AnLF 2.

Optionally, in this embodiment of this application, "the first network element sends model information of the second model to the fourth network element" may include two possible implementation manners. In one manner, after the first network element obtains the second model, the first network element actively pushes the model information of the second model to the fourth network element. In the other manner, after the first network element obtains the second model, the first network element receives a model request message (e.g., a third model request message) resent from the fourth network element, and the first network element may send the model information of the second model to the fourth network element. Optionally, a model usage scope of a requested model corresponding to the third model request message is the same as a usage scope of the second model.

In this embodiment of this application, if the above second model is a model obtained by retaining the first model and the second model updates and replaces the first model, a model ID of the second model is the same as a model ID of the first model (e.g., model ID1). If the second model is a model obtained by model reselection or the second model is a new model obtained based on retraining on the first model (which does not replace the first model), the model ID of the second model corresponds to a new model ID (e.g., model ID2), and the new model ID may be different from the model ID of the first model.

Optionally, the model selection method provided in this embodiment of this application may further include step 207 below.

Step 207: The first network element sends usage scope information of the second model to the fourth network element or the fifth network element.

A usage scope indicated by the usage scope information of the second model is the same as a usage scope indicated by the usage scope information of the first model, or the usage scope indicated by the usage scope information of the second model is determined according to the usage scope indicated by the usage scope information of the first model.

It is to be noted that "the usage scope information of the second model is determined according to the usage scope information of the first model" may be understood as follows: the usage scope indicated by the usage scope information of the second model includes the usage scope indicated by the usage scope information of the first model, or the usage scope indicated by the usage scope information of the second model overlaps with the usage scope indicated by the usage scope information of the first model. The usage scope may include at least one of a usage time scope, a usage object scope, and a usage area scope.

In this embodiment of this application, in a case that the first network element sends the above second model to the fourth network element, the first network element may send the usage scope information of the second model to the fourth network element; and in a case that the first network element sends the second model to the fifth network element, the first network element may send the usage scope information of the second model to the fifth network element.

In this embodiment of this application, after the first network element obtains model performance information of the first model, the first model may determine, according to the model performance information of the first model, whether the performance of the first model is lower than the above second preset performance, thereby determining whether the first model is retrained. Based on this, the model selection method provided in this embodiment of this application may further include any one of step 208, step 209, and step 210 below.

Step 208: The first network element calculates the model performance information of the first model.

The model performance information of the above first model is used for indicating the performance of the first model.

In an example in which the first network element is an MTLF, the MTLF obtains a corresponding verification data set (including label data, ground truth, and the like) according to the usage scope information of the first model, and calculates performance of an output result of the first model based on the verification data set and a data analysis output result of the first model, for example, calculates accuracy of the output result of the first model, thereby obtaining the model performance information of the first model.

Optionally, in this embodiment of this application, based on step 208 above, the first network element may record the usage scope information of the first model. The usage scope information indicates a scope of data task analysis or model performance measurement using the first model, including a usage area scope of the first model, a usage time scope of the first model, a usage object scope of the first model, and the like.

Step 209: The first network element receives the model performance information of the first model from the fourth network element.

In an example in which the fourth network element is an AnLF, the AnLF obtains a corresponding verification data set (including label data, ground truth, and the like) according to the usage scope information of the first model, calculates performance of an output result of the first model based on the verification data set and a data analysis output result set of the first model, for example, calculates accuracy of the output result of the first model, thereby obtaining the model performance information of the first model, and sends the model performance information of the first model to the first network element, for example, the MTLF.

Optionally, in this embodiment of this application, based on step 209 above, the fourth network element may send the usage scope information of the first model to the first network element, so that the first network element can receive the usage scope information of the first model from the fourth network element. The usage scope information of the first model may specifically be obtained with reference to the related description in the above embodiments. To avoid repetition, details are not described herein again.

Optionally, in this embodiment of this application, the fourth network element may include a plurality of network elements. Based on this, the plurality of network elements may jointly use a same first model and use the first model within a same or overlapping usage scope. Moreover, the plurality of network elements may report the model performance information of the first model respectively, for example, accuracy of the output result of the first model (i.e., model accuracy).

Step 210: The first network element receives the model performance information of the first model from a data analysis consumer.

Optionally, in this embodiment of this application, the above data analysis consumer may be a PCF, an AMF, or any other possible data analysis consumers, which may specifically be determined according to an actual usage requirement and is not limited in this embodiment of this application.

In this embodiment of this application, the data analysis consumer obtains a corresponding verification data set (including label data, ground truth, and the like) according to a data analysis result of the first model obtained from the fourth network element (e.g., the AnLF) and a scope of the model data analysis result used by the data analysis consumer, calculates performance of an output result of the first model based on the verification data set and the data analysis result of the first model, for example, calculates accuracy of the output result of the first model, thereby obtaining the model performance information of the first model, and sends the model performance information of the first model to the first network element, for example, the MTLF. The data analysis consumer may directly send the model performance information of the first model to the first network element, or may send the model performance information of the first model to the first network element through the fourth network element.

Optionally, in this embodiment of this application, a plurality of data analysis consumers may be provided, i.e., a plurality of data analysis consumers using the above data analysis result. The plurality of data analysis consumers may jointly calculate and report the model performance information of the above first model, for example, accuracy of the output result of the first model (i.e., model accuracy).

Optionally, in this embodiment of this application, based on step 210 above, the data analysis consumer may send the usage scope information of the first model to the first network element, so that the first network element can receive the usage scope information of the first model from the data analysis consumer. The data analysis consumer may directly send the usage scope information of the first model to the first network element, or may send the usage scope information of the first model to the first network element through the fourth network element. The usage scope information of the first model may specifically be obtained with reference to the related description in the above embodiments. To avoid repetition, details are not described herein again.

It is to be noted that in this embodiment of this application, for a scenario where the above K models include a plurality of candidate models applicable to the data analysis task corresponding to the first analytic ID, the first network element may obtain model performance information of the plurality of candidate models through step 208, step 209, or step 210.

Optionally, in this embodiment of this application, before step 205, the model selection method provided in this embodiment of this application may further include step 211 and step 212 below.

Step 211: The first network element receives a second model request message from the fourth network element.

Step 212: The first network element sends the model information of the first model to the fourth network element according to the second model request message.

The above first model may include one model or a plurality of models. The description of the second model request message may specifically be obtained with reference to the detailed description of the first model request message in the above embodiments. Details are not described herein again.

Optionally, in this embodiment of this application, in a case that the above first model includes a plurality of models, before step 212, the model selection method provided in this embodiment of this application may further include step 213 or step 214 below.

Step 213: The first network element determines whether the fourth network element supports obtaining the plurality of models.

Step 214: The first network element determines a model usage capability of the fourth network element.

In this embodiment of this application, if there are a plurality of models matching model information corresponding to the second model request message, the first network element may determine whether the fourth network element supports obtaining the plurality of models or determine the model usage capability of the fourth network element to determine whether the fourth network element supports usage of the plurality of models. If the fourth network element may support usage of the plurality of models, the first network element sends model information of the plurality of models to the fourth network element. Otherwise, the first network element sends only one of the plurality of models to the fourth network element. That is, the first network element does not send the model information of the plurality of models to the fourth network element at the same time.

Optionally, in this embodiment of this application, in a case that the above first network element is an ADRF, the model selection method provided in this embodiment of this application may further include step 215 below.

Step 215: The first network element obtains the model information of the N candidate models from a third network element.

In this embodiment of this application, the above third network element may be an MTLF. In this way, before the ADRF records the model information of the N candidate models, the ADRF may first obtain the model information of the N candidate models from the MTLF.

It may be understood that, in a case that the first network element is an MTLF, the MTLF may first obtain the model information of the N candidate models and then record the model information of the N candidate models.

Optionally, in this embodiment of this application, before step 201 (a first network element records model information of N candidate models), the model selection method provided in this embodiment of this application may further include step 216 below.

Step 216: The first network element obtains usage scope information and/or model performance information of each of the N candidate models.

In this embodiment of this application, before the first network element records the model information of the N candidate models, the first network element first obtains the usage scope information and/or the model performance information of each of the N candidate models, so that the model information of the N candidate models can be correspondingly recorded.

It may be understood that, in this manner, the first network element does not filter the N candidate models and only records information corresponding to the N candidate models (including usage scope information, model performance information, and the like). Then, after a model request message sent by another network element is received, an appropriate model may be selected and sent to the network element according to the message.

Optionally, in this embodiment of this application, step 216 above may specifically be implemented by using step 216a, step 216b, or step 216c below.

Step 216a: The first network element determines the usage scope information of each of the N candidate models and/or calculates the model performance information of each of the N candidate models.

Step 216b: The first network element receives the usage scope information and/or the model performance information of each of the N candidate models from a seventh network element.

The above seventh network element may include one network element or a plurality of network elements. The seventh network element may be an AnLF.

Optionally, the seventh network element may be the same as or different from the second network element in the above embodiment, which may specifically be determined according to an actual usage requirement and is not limited in this embodiment of this application.

Step 216c: The first network element receives the usage scope information and/or the model performance information of each of the N candidate models from a data analysis consumer.

It is to be noted that the related description of "the first network element obtains usage scope information and/or model performance information of each of the N candidate models" may specifically be obtained with reference to the detailed description of "the first network element obtains usage scope information and/or model performance information of the first model" in the above embodiments. To avoid repetition, details are not described herein again.

Optionally, in this embodiment of this application, in a case that the above first network element is an MTLF, after step 201 (a first network element records model information of N candidate models), the model selection method provided in this embodiment of this application may further include step 217 below.

Step 217: The first network element stores the model information of the N candidate models to a sixth network element.

The above sixth network element may include an ADRF or a unified data repository (unified data repository, UDR).

Optionally, in this embodiment of this application, based on step 217 above, step 203 above may specifically be implemented by using step 203a below.

Step 203a: The first network element sends first information to the second network element, where the first information is used for indicating that the model information of the P candidate models is stored in the sixth network element.

The above first information may include at least one of ID information, a fully qualified domain name (fully qualified domain name, FQDN), and address information of the sixth network element. Certainly, the first information may further include other information corresponding to the sixth network element, which may specifically be determined according to an actual usage requirement and is not limited in this embodiment of this application.

It may be understood that at least one of the ID information, the FQDN, and the address information of the sixth network element may be taken as download address information of the P candidate models, so that the second network element can download the model information of the P candidate models according to at least one of the ID information, the FQDN, and the address information of the sixth network element.

In this embodiment of this application, after the MTLF stores the model information of the N candidate models to the sixth network element, if the second network element sends the above first model request message to the first network element, in a case that the model information of the M candidate models in the N candidate models matches the model information corresponding to the first model request message, the first network element may send the above first information to the second network element. Therefore, after the second network element receives the first information, the second network element may download the model information of the P candidate models from the sixth network element.

Optionally, in this embodiment of this application, after the first network element stores the model information of the N candidate models to the sixth network element, an eighth network element may directly send a model request message to the sixth network element, so as to obtain model information of a model from the sixth network element. The eighth network element may be configured to obtain model information of a model from the sixth network element. The eighth network element may be an AnLF, for example, an AnLF 3.

The model selection method provided in this embodiment of this application is exemplified below with reference to the accompanying drawings.

### Embodiment 1

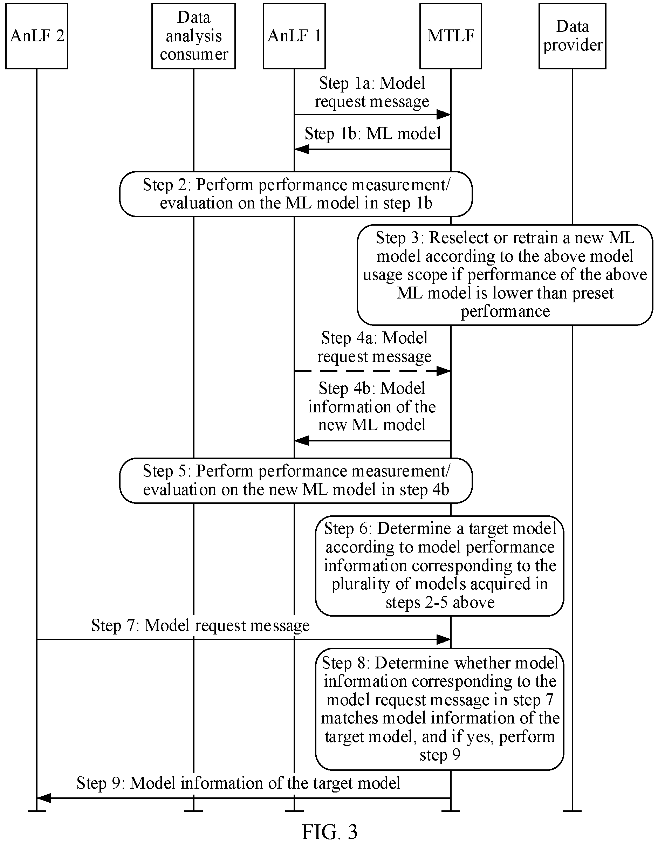

As shown in FIG. 3, in step 1a, an AnLF1 may send a model request message (e.g., request (request) 1) to an MTLF. The model request message may include an analytic ID (analytic ID), model filter information (model filter information 1), and the like.

In step 1b, the MTLF may provide the AnLF1 with model information of an ML model (e.g., a model applicable to an AI task 1). The model information may be an initial model (initial model), and a model ID is a model ID1.

In step 2, the MTLF/AnLF 1/data analysis consumer performs performance measurement/evaluation (analytics performance evaluation) on the ML model in step 1b. A model ID of the model, a data analysis task to which the model is applicable, and a model usage scope are recorded. If the AnLF 1/data analysis consumer performs performance measurement on the model, performance information of the model is reported to the MTLF, and usage scope information of the model is reported.

In step 3, the MTLF reselects or retrains a new ML model according to the above model usage scope if performance of the above ML model is lower than preset performance. The new ML model may be a model different from the initial model or an updated model of the initial model.

In step 4a (optionally), the AnLF 1 sends a model request message (e.g., request 2) to the MTLF.

In step 4b, the MTLF sends model information of the new ML model to the AnLF 1. The model information may include a model ID and a model usage scope (model usage scope). If the new ML model is a model different from the initial model, the model ID may be a model ID2. If the new ML model is an updated model of the initial model, the model ID may be a model ID1.

In step 5, the MTLF/AnLF 1/data analysis consumer performs performance measurement/evaluation on the new ML model in step 4b. Details may be obtained with reference to the description in step 2 above.

In step 6, the MTLF determines a target model according to model performance information corresponding to the plurality of models obtained in steps 2-5 above. The target model may be one of the plurality of models that has the highest/best performance, or the target model may be one of the plurality of models that has performance higher/better than the preset performance. One or more target models may be provided.

In step 7, an AnLF2 sends a model request message (e.g., request 3) to the MTLF to request a model corresponding to an analytic ID. The analytic ID may be the same as the analytic ID in step 1a. The model request message includes model filter information (e.g., model filter information 2) and the like.

In step 8, the MTLF determines whether model information corresponding to the model request message in step 7 matches model information of the target model, and if yes, step 9 below is performed.

In step 9, the MTLF sends the model information of the target model to the AnLF2.

### Embodiment 2

Still referring to FIG. 3, different from Embodiment 1, in step 1b, if the MTLF has a plurality of candidate models that meet a requirement for the model request message sent by the AnLF1, the MTLF may send the plurality of candidate models to the AnLF1 at the same time. Optionally, before sending the models, the MTLF needs to first determine that the AnLF supports a capability to obtain or use a plurality of models, and if not, the MTLF does not send the plurality of candidate models to the AnLF at the same time.

In step 2, performance measurement may be performed on the plurality of candidate models by using the method similar to step 2 in Embodiment 1.

### Embodiment 3

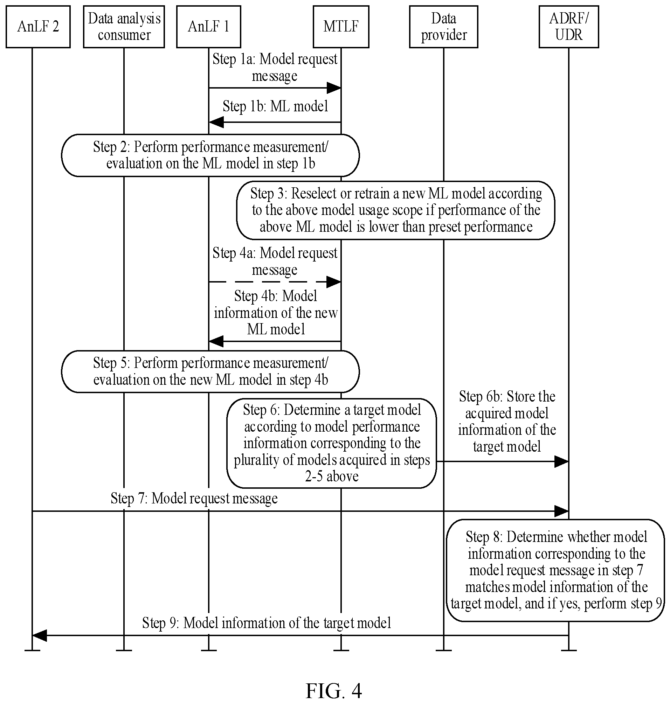

As shown in FIG. 4, different from Embodiment 1 and Embodiment 2, in step 6b, the MTLF stores the obtained model information of the target model into a database or a unified data platform (such as an ADRF or a UDR).

In step 7, the AnLF2 sends a model obtaining request message to the database or the unified data platform.

In step 8, the database or the unified data platform determines whether model information corresponding to the model request message in step 7 matches the model information of the target model, and if yes, step 9 below is performed.

The matching method in step 8 above may be similar to the matching method in step 8 in Embodiment 1.

In step 9, the database or the unified data platform sends the model information of the target model to the AnLF2.

It is to be noted that steps not described in Embodiment 2 and Embodiment 3 may be obtained with reference to the related description in Embodiment 1. To avoid repetition, details are not described herein again.

### Embodiment 4

### Steps 1-6 are the same as steps 1-6 in Embodiment 1 above.

In step 6a, the MTLF stores the model information of the target model (i.e., the candidate model in this embodiment of this application) in the ADRF, and records corresponding ADRF information (e.g., ID information of the ADRF, address information of the ADRF, and the like).

### Steps 7-8 are the same as steps 7-8 in Embodiment 1 above.

In step 9, the MTLF sends ADRF information stored in the matching target model to the AnLF2, so that the AnLF2 can obtain the model information of the target model from the ADRF.

The model selection method provided in this embodiment of this application may be performed by a model selection apparatus. In this embodiment of this application, the model selection apparatus provided in this embodiment of this application is described with an example in which the model selection apparatus performs the model selection method.

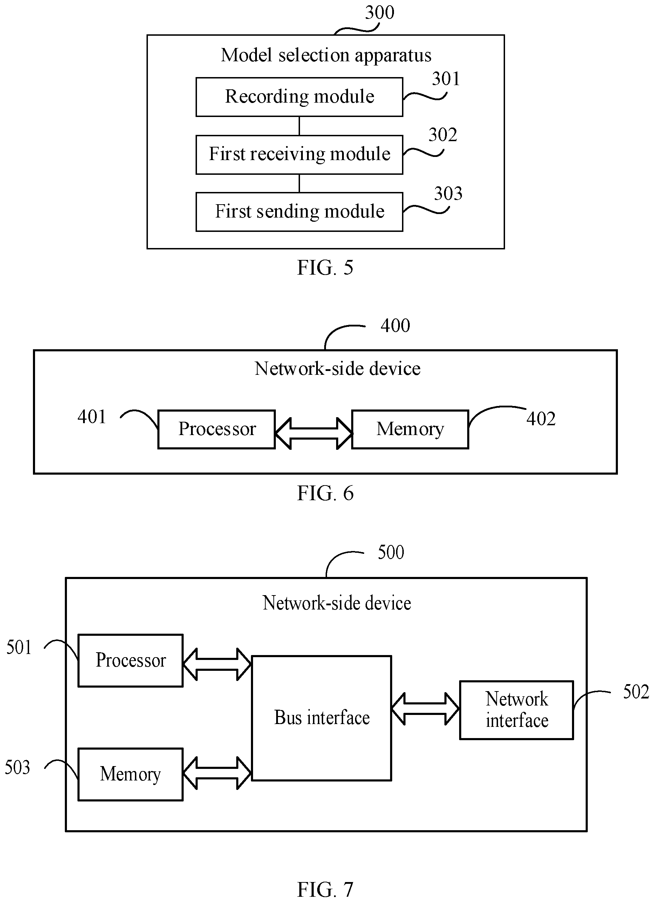

As shown in FIG. 5, an embodiment of this application provides a model selection apparatus 300. The model selection apparatus 300 includes a recording module 301, a first receiving module 302, and a first sending module 303. The recording module 301 is configured to record model information of N candidate models, where the N candidate models are applicable to a data analysis task corresponding to a first analytic ID. The first receiving module 302 is configured to receive a first model request message from a second network element. The first sending module 303 is configured to send, in a case that model information of M candidate models of the N candidate models matches model information corresponding to the first model request message, model information of P candidate models of the M candidate models to the second network element; where N, M, and P are all positive integers, and N≥M≥P.

Optionally, in this embodiment of this application, the model selection apparatus further includes: a determination module configured to determine, according to model performance information of K models, the N candidate models that meet a preset condition from the K models, where the K models are applicable to the data analysis task corresponding to the first analytic ID, and K is a positive integer; where the preset condition includes either of the following: performance indicated by the model performance information being the highest among the K models; and the performance indicated by the model performance information being higher than first preset performance.

Optionally, in this embodiment of this application, the model selection apparatus further includes: a first obtaining module configured to obtain the model information of the N candidate models from a third network element.

Optionally, in this embodiment of this application, the model information of each of the candidate models includes at least one of the following.
a model ID of the candidate model;
model file information of the candidate model;
download address information of the candidate model, where the download address information is used for indicating a storage address of a model file of the candidate model;
an analytic ID of the candidate model, where the analytic ID is used for identifying a data analysis task to which the candidate model is applicable;
usage scope information of the candidate model; and
model performance information of the candidate model.

Optionally, in this embodiment of this application, the usage scope information indicates at least one of the following:
a usage area scope;
a usage time scope; and
a usage object scope.

Optionally, in this embodiment of this application, performance indicated by the model performance information includes at least one of model accuracy and a model MAE.

Optionally, in this embodiment of this application, the model selection apparatus further includes: a second obtaining module configured to obtain usage scope information and/or model performance information of each of the N candidate models.

Optionally, in this embodiment of this application, the second obtaining module is specifically configured to determine the usage scope information of each candidate model and/or calculate the model performance information of each candidate model; or the second obtaining module is specifically configured to receive the usage scope information and/or the model performance information of each candidate model from a seventh network element; or the second obtaining module is specifically configured to receive the usage scope information and/or the model performance information of each candidate model from a data analysis consumer.

Optionally, in this embodiment of this application, the first model request message includes at least one of the following.
a second analytic ID, where the second analytic ID is used for identifying a data analysis task to which the requested model is applicable;
model filter information, where the model filter information is used for indicating a condition that the requested model needs to meet;
model object information, where the model object information is used for indicating a training object for which the model is requested;
model reporting information, where the model reporting information includes at least one of a reporting manner, application time, and reporting time of the requested model; and
model performance requirement information, where the model performance requirement information is used for indicating performance that the requested model needs to meet.

Optionally, in this embodiment of this application, the matching between the model information of the M candidate models and the model information corresponding to the first model request message includes at least one of the following:
the first analytic ID being the same as the second analytic ID;
a usage area scope included in model usage scope information of the M candidate models matching the model filter information;
a usage object scope included in model usage scope information of the M candidate models matching the model object information;
a usage time scope included in model usage scope information of the M candidate models matching the model reporting information; and
model performance information of the M candidate models meeting performance indicated by the model performance requirement information.

Optionally, in this embodiment of this application, the K models include a plurality of candidate models applicable to the data analysis task corresponding to the first analytic ID, or the K models includes a plurality of models obtained after multiple times of training according to the data analysis task corresponding to the first analytic ID.

Optionally, in this embodiment of this application, in a case that the K models include a plurality of models obtained after multiple times of training according to the data analysis task corresponding to the first analytic ID, the model selection apparatus further includes: an execution module configured to, in a case that performance of a first model sent by the sending module to a fourth network element is lower than second preset performance, retrain the first model or perform model reselection according to usage scope information of the first model to obtain a second model, where the second model is one of the K models; and a second sending module configured to send model information of the second model to the fourth network element or a fifth network element.

Optionally, in this embodiment of this application, the model selection apparatus further includes: a third sending module configured to send usage scope information of the second model to the fourth network element or a fifth network element. A usage scope indicated by the usage scope information of the second model is the same as a usage scope indicated by the usage scope information of the first model, or the usage scope indicated by the usage scope information of the second model is determined according to the usage scope indicated by the usage scope information of the first model.

Optionally, in this embodiment of this application, the model selection apparatus further includes: a calculation module configured to calculate the model performance information of the first model; or a second receiving module further configured to receive the model performance information of the first model from the fourth network element; or a third receiving module further configured to receive the model performance information of the first model from a data analysis consumer; where the model performance information of the first model is used for indicating the performance of the first model.

Optionally, in this embodiment of this application, the model selection apparatus further includes: a storage module configured to store the model information of the N candidate models to a sixth network element.

Optionally, in this embodiment of this application, the first sending module is specifically configured to send first information to the second network element, where the first information is used for indicating that the model information of the P candidate models is stored in the sixth network element. The first information includes at least one of ID information, an FQDN, and address information of the sixth network element.

Optionally, in this embodiment of this application, the sixth network element includes an ADRF or a UDR.

Optionally, in this embodiment of this application, the second network element includes an AnLF or MTLF.

According to the model selection apparatus provided in this embodiment of this application, since the model selection apparatus may record model information of candidate models applicable to a data analysis task, the model selection apparatus, after receiving a first model request message, may determine whether the recorded model information of the candidate models matches model information corresponding to the first model request message, thereby determining an optimal model that meets the first model request message or a model that meets a performance requirement. In this way, performance of the model in data analysis can be ensured.

The model selection apparatus in this embodiment of this application may be a network-side device, for example, a network-side device with an operating system, or a component in a network-side device, for example, an integrated circuit or a chip. The network-side device may be an NWDAF, an MTLF, an AnLF, an ARDF, or the like, which is not specifically limited in this embodiment of this application.

The model selection apparatus provided in this embodiment of this application can implement the processes implemented in the embodiments of the above model selection method, and achieve the same technical effects. To avoid repetition, details are not described herein again.

Optionally, as shown in FIG. 6, an embodiment of this application further provides a network-side device 400, including a processor 401 and a memory 402. The memory 402 stores a program or an instruction executable on the processor 401. For example, in a case that the network-side device 400 is a network-side device, when the program or the instruction is executed by the processor 401, steps in the embodiments of the above model selection method are implemented, and the same technical effects can be achieved. To avoid repetition, details are not described herein again.

Specifically, an embodiment of this application further provides a network-side device. As shown in FIG. 7, the network-side device 500 includes: a processor 501, a network interface 502, and a memory 503. The network interface 502 is, for example, a common public radio interface (common public radio interface, CPRI).

Specifically, the network-side device 500 in this embodiment of this application further includes: a program or an instruction stored in the memory 503 and executable on the processor 501. The processor 501 calls the instruction or the program in the memory 503 to execute the method executed by the modules shown in FIG. 6, and the same technical effects are achieved. To avoid repetition, details are not described herein again.

An embodiment of this application further provides a computer-readable storage medium. The readable storage medium stores a program or an instruction. When the program or the instruction is executed by a processor, the processes in the embodiments of the above model selection method are implemented, and the same technical effects can be achieved. To avoid repetition, details are not described herein again.

The processor is the processor in the terminal in the above embodiments. The readable storage medium includes a computer-readable storage medium, for example, a computer read-only memory (ROM), a random access memory (RAM), a magnetic disk, an optical disc, or the like.

An embodiment of this application further provides a chip. The chip includes a processor and a communication interface. The communication interface is coupled to the processor. The processor is configured to run a program or an instruction to implement the processes in the embodiments of the above model selection method, and the same technical effects can be achieved. To avoid repetition, details are not described herein again.

It is to be understood that the chip as referred to in this embodiment of this application may alternatively be called a system-on-chip, a system chip, a chip system, a system-on-a-chip, or the like.

An embodiment of this application further provides a computer program/program product. The computer program/program product is stored in a storage medium. The computer program/program product is executed by at least one processor to implement the processes in the embodiments of the above model selection method, and the same technical effects can be achieved. To avoid repetition, details are not described herein again.

It is to be noted that the terms "comprise", "include", and any other variants thereof herein are intended to cover non-exclusive inclusion, so that a process, a method, an item, or an apparatus that includes a series of elements not only includes these elements, but may also include other elements not expressly listed, or also include elements inherent to this process, method, item, or apparatus. Without more limitations, an element defined by a phrase "including a/an ..." does not exclude presence of other identical elements in the process, method, item, or apparatus that includes the element. In addition, it is to be noted that the scopes of the methods and apparatuses in the implementations of this application are not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

According to the descriptions in the foregoing implementations, a person skilled in the art may clearly understand that the method in the foregoing embodiments may be implemented by software plus a necessary universal hardware platform or by hardware. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network-side device, or the like) to perform the methods in the embodiments of this application.

The embodiments of this application have been described above with reference to the accompanying drawings, but this application is not limited to the foregoing specific implementations. The foregoing specific implementations are merely schematic instead of restrictive. Under enlightenment of this application, a person of ordinary skill in the art may make many forms without departing from aims of this application and the protection scope of the claims, all of which fall within the protection scope of this application.

## Claims

1. A model selection method, comprising:
recording, by a first network element, model information of N candidate models, wherein the N candidate models are applicable to a data analysis task corresponding to a first analytic identifier, ID;
receiving, by the first network element, a first model request message from a second network element; and
sending, by the first network element in a case that model information of M candidate models of the N candidate models matches model information corresponding to the first model request message, model information of P candidate models of the M candidate models to the second network element;
wherein N, M, and P are all positive integers, N is greater than or equal to M, and M is greater than or equal to P.

2. The method according to claim 1, wherein before the recording, by a first network element, model information of N candidate models, the method further comprises:
determining, by the first network element according to model performance information of K models, the N candidate models that meet a preset condition from the K models, wherein the K models are applicable to the data analysis task corresponding to the first analytic ID, and K is a positive integer;
wherein the preset condition comprises either of the following:
performance indicated by the model performance information being a highest among the K models; and
the performance indicated by the model performance information being higher than first preset performance.

3. The method according to claim 1 or 2, wherein the method further comprises:
obtaining, by the first network element, the model information of the N candidate models from a third network element.

4. The method according to any one of claims 1 to 3, wherein model information of a candidate model comprises at least one of the following:
a model identifier of the candidate model;
model file information of the candidate model;
download address information of the candidate model, wherein the download address information is used for indicating a storage address of a model file of the candidate model;
an analytic ID of the candidate model, wherein the analytic ID is used for identifying a data analysis task to which the candidate model is applicable;
usage scope information of the candidate model; and
model performance information of the candidate model.

5. The method according to claim 4, wherein the usage scope information indicates at least one of the following:
a usage area scope;
a usage time scope; and
a usage object scope.

6. The method according to claim 2 or 4, wherein performance indicated by model performance information comprises at least one of model accuracy and a model mean absolute error, MAE.

7. The method according to any one of claims 1 to 6, wherein before the recording, by a first network element, model information of N candidate models, the method further comprises:
obtaining, by the first network element, usage scope information and/or model performance information of each of the N candidate models.

8. The method according to claim 7, wherein the obtaining, by the first network element, usage scope information and/or model performance information of each of the N candidate models comprises:
determining, by the first network element, the usage scope information of each candidate model and/or calculating the model performance information of each candidate model;
receiving, by the first network element, the usage scope information and/or the model performance information of each candidate model from a seventh network element; and
receiving, by the first network element, the usage scope information and/or the model performance information of each candidate model from a data analysis consumer.

9. The method according to any one of claims 1 to 8, wherein the first model request message comprises at least one of the following:
a second analytic ID, wherein the second analytic ID is used for identifying a data analysis task to which a requested model is applicable;
model filter information, wherein the model filter information is used for indicating a condition that the requested model needs to meet;
model object information, wherein the model object information is used for indicating a training object for which the model is requested;
model reporting information, wherein the model reporting information comprises at least one of a reporting manner, application time, and reporting time of the requested model; and
model performance requirement information, wherein the model performance requirement information is used for indicating performance that the requested model needs to meet.

10. The method according to claim 9, wherein the matching between the model information of the M candidate models and the model information corresponding to the first model request message comprises at least one of the following:
the first analytic ID being the same as the second analytic ID;
a usage area scope comprised in model usage scope information of the M candidate models matching the model filter information;
a usage object scope comprised in the model usage scope information of the M candidate models matching the model object information;
a usage time scope comprised in the model usage scope information of the M candidate models matching the model reporting information; and
model performance information of the M candidate models matching performance indicated by the model performance requirement information.

11. The method according to any one of claims 2 to 10, wherein the K models comprise a plurality of candidate models applicable to the data analysis task corresponding to the first analytic ID, or the K models comprise a plurality of models obtained after multiple times of training according to the data analysis task corresponding to the first analytic ID.

12. The method according to claim 11, wherein in a case that the K models comprise the plurality of models obtained after the multiple times of training according to the data analysis task corresponding to the first analytic ID, the method further comprises:
in a case that performance of a first model sent by the first network element to a fourth network element is lower than second preset performance, retraining the first model or performing model reselection, by the first network element according to usage scope information of the first model, to obtain a second model, wherein the second model is one of the K models; and
sending, by the first network element, model information of the second model to the fourth network element or a fifth network element.

13. The method according to claim 12, wherein the method further comprises:
sending, by the first network element, usage scope information of the second model to the fourth network element or the fifth network element;
wherein a usage scope indicated by the usage scope information of the second model is the same as a usage scope indicated by the usage scope information of the first model, or the usage scope indicated by the usage scope information of the second model is determined according to the usage scope indicated by the usage scope information of the first model.

14. The method according to claim 12, wherein the method further comprises any one of the following:
calculating, by the first network element, model performance information of the first model;
receiving, by the first network element, the model performance information of the first model from the fourth network element; and
receiving, by the first network element, the model performance information of the first model from a data analysis consumer;
wherein the model performance information of the first model is used for indicating performance of the first model.

15. The method according to any one of claims 1 to 14, wherein after the recording, by a first network element, model information of N candidate models, the method further comprises:
storing, by the first network element, the model information of the N candidate models to a sixth network element.

16. The method according to claim 15, wherein the sending, by the first network element, model information of P candidate models of the M candidate models to the second network element comprises:
sending, by the first network element, first information to the second network element, wherein the first information is used for indicating that the model information of the P candidate models is stored in the sixth network element;
wherein the first information comprises at least one of ID information, a fully qualified domain name, FQDN, and address information of the sixth network element.

17. The method according to claim 15 or 16, wherein the sixth network element comprises an analytics data storage function, ADRF, or a unified data repository, UDR.

18. The method according to any one of claims 1 to 16, wherein the first network element comprises a model training logical function, MTLF, or an analytics data storage function, ADRF.

19. The method according to claim 1, wherein the second network element comprises an analytics logical function, AnLF, or an MTLF.

20. A model selection apparatus, comprising:
a recording module configured to record model information of N candidate models, wherein the N candidate models are applicable to a data analysis task corresponding to a first analytic identifier, ID;
a first receiving module configured to receive a first model request message from a second network element; and
a first sending module configured to send, in a case that model information of M candidate models of the N candidate models matches model information corresponding to the first model request message, model information of P candidate models of the M candidate models to the second network element;
wherein N, M, and P are all positive integers, N is greater than or equal to M, and M is greater than or equal to P.

21. The apparatus according to claim 20, wherein the apparatus further comprises:
a determination module configured to determine, according to model performance information of K models, the N candidate models that meet a preset condition from the K models, wherein the K models are applicable to the data analysis task corresponding to the first analytic ID, and K is a positive integer;
wherein the preset condition comprises either of the following:
performance indicated by the model performance information being a highest among the K models; and
the performance indicated by the model performance information being higher than first preset performance.

22. The apparatus according to claim 20 or 21, wherein the apparatus further comprises:
a first obtaining module configured to obtain the model information of the N candidate models from a third network element.

23. The apparatus according to any one of claims 20 to 22, wherein model information of a candidate model comprises at least one of the following:
a model identifier of the candidate model;
model file information of the candidate model;
download address information of the candidate model, wherein the download address information is used for indicating a storage address of a model file of the candidate model;
an analytic ID of the candidate model, wherein the analytic ID is used for identifying a data analysis task to which the candidate model is applicable;
usage scope information of the candidate model; and
model performance information of the candidate model.

24. The apparatus according to claim 23, wherein the usage scope information indicates at least one of the following:
a usage area scope;
a usage time scope; and
a usage object scope.

25. The apparatus according to claim 21 or 23, wherein performance indicated by model performance information comprises at least one of model accuracy and a model mean absolute error, MAE.

26. The apparatus according to any one of claims 20 to 25, wherein the apparatus further comprises:
a second obtaining module configured to obtain usage scope information and/or model performance information of each of the N candidate models.

27. The apparatus according to claim 26, wherein the second obtaining module is specifically configured to determine the usage scope information of each candidate model and/or calculate the model performance information of each candidate model; or
the second obtaining module is specifically configured to receive the usage scope information and/or the model performance information of each candidate model from a seventh network element; and or
the second obtaining module is specifically configured to receive the usage scope information and/or the model performance information of each candidate model from a data analysis consumer.

28. The apparatus according to any one of claims 20 to 27, wherein the first model request message comprises at least one of the following:
a second analytic ID, wherein the second analytic ID is used for identifying a data analysis task to which a requested model is applicable;
model filter information, wherein the model filter information is used for indicating a condition that the requested model needs to meet;
model object information, wherein the model object information is used for indicating a training object for which the model is requested;
model reporting information, wherein the model reporting information comprises at least one of a reporting manner, application time, and reporting time of the requested model; and
model performance requirement information, wherein the model performance requirement information is used for indicating performance that the requested model needs to meet.

29. The apparatus according to claim 28, wherein the matching between the model information of the M candidate models and the model information corresponding to the first model request message comprises at least one of the following:
the first analytic ID being the same as the second analytic ID;
a usage area scope comprised in model usage scope information of the M candidate models matching the model filter information;
a usage object scope comprised in the model usage scope information of the M candidate models matching the model object information;
a usage time scope comprised in the model usage scope information of the M candidate models matching the model reporting information; and
model performance information of the M candidate models matching performance indicated by the model performance requirement information.

30. The apparatus according to any one of claims 21 to 29, wherein the K models comprise a plurality of candidate models applicable to the data analysis task corresponding to the first analytic ID, or the K models comprise a plurality of models obtained after multiple times of training according to the data analysis task corresponding to the first analytic ID.

31. The apparatus according to claim 30, wherein in a case that the K models comprise the plurality of models obtained after the multiple times of training according to the data analysis task corresponding to the first analytic ID, the apparatus further comprises:
an execution module configured to, in a case that performance of a first model sent by the sending module to a fourth network element is lower than second preset performance, retrain the first model or perform model reselection according to usage scope information of the first model to obtain a second model, wherein the second model is one of the K models; and
a second sending module configured to send model information of the second model to the fourth network element or a fifth network element.

32. The apparatus according to claim 31, wherein the apparatus further comprises:
a third sending module configured to send usage scope information of the second model to the fourth network element or a fifth network element;
wherein a usage scope indicated by the usage scope information of the second model is the same as a usage scope indicated by the usage scope information of the first model, or the usage scope indicated by the usage scope information of the second model is determined according to the usage scope indicated by the usage scope information of the first model.

33. The apparatus according to claim 31, wherein the apparatus further comprises:
a calculation module configured to calculate model performance information of the first model; or
a second receiving module configured to receive the model performance information of the first model from the fourth network element; and or
a third receiving module configured to receive the model performance information of the first model from a data analysis consumer;
wherein the model performance information of the first model is used for indicating performance of the first model.

34. The apparatus according to any one of claims 20 to 33, wherein the apparatus further comprises:
a storage module configured to store the model information of the N candidate models to a sixth network element.

35. The apparatus according to claim 34, wherein the first sending module is specifically configured to send first information to the second network element, wherein the first information is used for indicating that the model information of the P candidate models is stored in the sixth network element;
wherein the first information comprises at least one of ID information, a fully qualified domain name, FQDN, and address information of the sixth network element.

36. The apparatus according to claim 34 or 35, wherein the sixth network element comprises an analytics data storage function, ADRF, or a unified data repository, UDR.

37. The apparatus according to claim 20, wherein the second network element comprises an analytics logical function, AnLF, or a model training logical function, MTLF.

38. A network-side device, comprising a processor and a memory, wherein the memory stores a program or an instruction executable on the processor, and when the program or the instruction is executed by the processor, steps of the model selection method according to any one of claims 1 to 19 are implemented.

39. A readable storage medium, wherein the readable storage medium stores a program or an instruction, and when the program or the instruction is executed by a processor, steps of the model selection method according to any one of claims 1 to 19 are implemented.

40. A computer program product, wherein the program product is executed by at least one processor to implement the model selection method according to any one of claims 1 to 19.
